# EUROPEAN PATENT SPECIFICATION

(11) **EP 1 611 794 B1**
(45) Date of publication and mention of the grant of the patent: **11.04.2012**
(21) Application number: 04425487.8
(22) Date of filing: 30.06.2004
(51) Int. Cl.: A23D 7/01

(54) **Margarine-like food composition with reduced fat content**
Margarineähnliche Lebensmittelzusammensetzung mit reduziertem Fettgehalt
Composition alimentaire à faible teneur en graisse similaire à la margarine

(43) Date of publication of application: 04.01.2006
(73) Proprietor: BARILLA G. e R. Fratelli S.p.A., 43100 Parma (IT)
(72) Inventor: Buttini, Roberto, 43058 Sorbolo (Parma) (IT); Gazzola, Gianluca, 29020 Carmiano di Vigolzone (Piacenza) (IT); Righi, Aldo, 20052 Monza (Milano) (IT)
(74) Representative: Ferreccio, Rinaldo

(56) References cited:
- EP-A- 0 605 217
- EP-A- 0 864 255
- WO-A-02/094037
- US-A- 5 527 556
- US-A- 6 048 564
- US-B1- 6 303 778
- US-B1- 6 461 661

## Description

### Field of Application

The present invention refers, in general, to the technical sector of the food industry. The invention concerns, in particular, a healthy margarine composition of reduced fat content suitable for the production of laminated puff pastry doughs.

### State of the Art

Margarines of reduced fat content have long been available on the market. Such margarines include in their formulations ingredients such as maltodextrins, modified starch, xanthan gum, and other gelling agents (generally carbohydrates but also proteins) that have the function of replacing part of the fat content, thus reducing the calorie contribution per gram of margarine.

Generally, however, such formulations show several limitations. Many of them mimic margarine only for applications at room temperature, and are therefore not suitable for puff pastry doughs, or in any case lead to outcomes that are unsatisfactory and not comparable with those obtained with conventional margarine. Indeed a margarine appropriate for the production of pastries must easily spread into even layers when compressed between two dough layers. Hence, the consistency must be such that it is neither too hard nor too soft: in the first instance, it would break the dough, and in the latter it would be partly absorbed by the dough itself.

Other formulations contain butter, which the consumer does not perceive as an ingredient that is either healthy or dietetic, and which also renders the product unclassifiable as margarine. Certain formulations contain added ingredients such as modified starch, which is an artificial ingredient and, hence, perceived by the consumer as a chemical additive. Finally, certain compositions contain added ingredients such as maltodextrins that are not easy to satisfactorily match with an emulsifier and which, although less calorific than an equivalent amount of lipids, nevertheless carry 4 kcal/g.

An example of such formulations is given in patent US 5 695 806 (Mrs Bateman's Bakery) which describes a low fat puff pastry composition based on maltodextrins, water soluble pre-gelatinized starch, water and butter. However, the amount of butter necessary to obtain a product with the required characteristics varies between 1 and 40 %. Hence, from the point of view of consumer perception, this formulation does not appear particularly healthy or dietetic, as butter has a high cholesterol content, which is notoriously associated with a high risk of cardiovascular disease. The composition may also include, among the other ingredients, xanthan gum and colorings.

Patent EP 529894 (Staley) describes methods to produce low fat content foodstuffs using enzymatically de-branched amylopectin precipitates. The method involves enzymatic reactions on the amylopectin starch, thus forming precipitates that act as gelling agents when dispersed in water. The precipitate is then fragmented to improve the amylopectin properties. This formulation is suitable for partial replacement of the fats used for the preparation of puff pastry doughs; however, its main drawback is its high sensitivity to excessive heat. Furthermore enzymatically de-branched amylopectin is not a natural ingredient.

Patent US 5 576 043 (American Maize-Products Company) concerns a shortening substitute for laminated dough the composition of which is based on pre-gelatinized unmodified starch, pre-gelatinized modified starch, monoglycerides, shortening and water. The formulation can also include the presence of a plasticizer, for example glycerine, and maltodextrin. This margarine thus contains "artificial" ingredients.

Therefore, there is the need to provide a reduced fat margarine that is suitable for the production of puff pastry doughs, which has a reduced fat content and which is perceived as a healthy and natural food, without suffering any of the drawbacks of existing formulations.

Some patents give a partial solution to such a problem by including inulin in the formulation. Inulin is a dietary fiber produced by extraction from plants such as chicory, asparagus, garlic, banana, etc., and is therefore a natural ingredient. Its molecule consists of β-2,1 linked fructose units, resistant to human digestive enzymes, and a glucose unit at the chain end. Inulin is classified as a prebiotic, in that it passes through the human digestive tract and finally reaches the colon intact, where it exerts a beneficial action on the intestinal flora. As it cannot be digested, inulin confers 1-1.2 kcal/g only.

Patent US 6 132 793 (Olivia Gourmet) describes a butter-like composition which includes a solidified emulsion of vegetable oil, water and a dietary fiber, preferably inulin. The formulation may also include lecithin as an emulsifier. The vegetable oil, preferably olive oil, is liquid at room temperature and is not hydrogenated. This, however, is not a true and proper margarine as unmodified vegetable oil is used and, furthermore, it is not specifically intended for puff pastry dough.

Document EP 648425 (Kraft) describes a spreadable or squeezable margarine which includes, as well as water and inulin, branched chain maize amylopectin starch together with gelling type maltodextrins or modified starch as fat mimetics. Non-gelling maltodextrins, polydextrose or low DE (that is, relatively long chained) corn syrup solids may also be included in the formulation. The recipe may include the addition of preservatives. This formulation does not necessarily include the presence of fats. Nevertheless, in this case also, the product is not suitable for use in puff pastry doughs but is limited to use at room temperature.

The Research Disclosure 394035 (Coop Cosun) document describes a margarine exhibiting the characteristics of hardness, consistency and plasticity required for oven baking, reduced fat content (up to 18.99%) and including, among other ingredients, inulin (up to 20%) and gelatin. However, it is not mentioned - and it is doubtful whether the properties of this composition are such that it is suitable for incorporation into puff pastry doughs. Also, because it contains gelatin, it is not suitable for the preparation of vegetarian food. Finally it is well known that many consumers have some reservations over foods containing ingredients - such as gelatin - which can be linked to the BSE (bovine spongiform encephalopathy) issue.

US patent No. 6,303,778 (Smits et al.) refers to a process for producing a fractionated polydisperse inulin composition from a native polydisperse inulin and the use of such composition in the manufacture of water-in-oil bread spreads.

US patent No. 6,461,661 (Benesh) refers to a butterlike composition which includes a solidified emulsion of at least one vegetable oil, water, and at least one hydrocolloid the composition having butterlike properties.

The problem at the basis of the following invention has therefore been that of providing a reduced fat content margarine, having a formulation that includes only ingredients perceived as natural and/or beneficial by the consumer, and that has the properties and behaviour of conventional margarine for puff pastry, in particular for "Danish pastry" dough types.

### Summary of the invention

Such a problem has been solved, according to the invention, which is defined by the claims, by a healthy reduced fat content puff pastry margarine composition for laminated doughs comprising in percent weight of the total weight, from 35.0 to 80.0 % of a fat phase containing vegetable fats, from 20.0 to 65.0 % of an aqueous phase comprising inulin, pectin and milk proteins, and at least one emulsifier, wherein said composition consists of natural ingredients only.

Preferably, the composition contains, in weight of the total weight, 45 to 65 % of a fat phase and 35 to 55 % of an aqueous phase, advantageously 50 to 60 % of a fat phase and 40 to 50 % of an aqueous phase.

Preferably, the vegetable fats consist of interesterified and/or fractionated vegetable oils, particularly palm oil. The emulsifier preferably consists of mono- and diglycerides of dietary fatty acids, in quantities varying between 0.2 and 2.0 % in weight of the total weight of the composition.

The inulin content is preferably between 5.0 and 20.0 %, advantageously between 10 and 18 % in weight of the weight of the composition, and preferably has a degree of polymerization of between 10 and 50 units.

Inulin, being a soluble fiber, is associated with improved digestion and absorption of certain minerals, particularly calcium, hence preventing osteoporosis and other mineral deficiency related conditions, and to a reduced risk of colon cancer. Furthermore, being a prebiotic fiber, inulin favors the growth of probiotic bacteria in the intestine with all the related beneficial effects.

Preferably, pectin is contained in an amount between 0.1 and 10.0 %, advantageously between 0.2 and 5.0 %, in weight of the weight of the composition, and is of the non-gelling type with a high degree of esterification, and is stable at a pH between 2 and 9. Moreover the water-dispersed particles are between 100 and 1200 µm in size.

Pectin is an acidic polysaccharide consisting mainly of a chain of galacturonic acid units, 300 to 1000 units in length, linked together by α-1,4 bonds. Pectin is a soluble, non-digestible fiber that constitutes about 40% of the fiber in fruit, especially in apples and citrus fruits, from which it is extracted under mild acidic conditions. It has a number of beneficial health effects, including a hypocholesterolemic effect. It is used in the food industry for its gelling properties, and it is a natural product.

Moreover, the aqueous phase of the present composition contains milk proteins in an amount of 0.1 - 2.0 % in weight of the weight of the composition.

Milk proteins are whey proteins having good emulsifying properties. It has been found that whey proteins act synergistically with the emulsifiers used in the present composition, thus considerably increasing their effect.

The present margarine composition is prepared by a process, also the subject of the present invention, comprising the steps of:
a) Preparing a homogeneous aqueous dispersion of pectin, inulin and milk proteins;
b) Preparing a homogeneous dispersion of at least one emulsifier in a fat mixture;
c) Emulsifying the two dispersions of steps a) and b) at a temperature of 50 - 90°C, advantageously at 65-75°C, plasticizing the margarine composition thus obtained, and leaving it to rest for 3 - 4 days at 8 - 20°C;
wherein, in step a) the aqueous dispersion is prepared by dispersing the pectin in water with stirring at 90-100°C, adding, still with stirring, inulin and milk proteins and cooling down to 50-80°C the aqueous dispersion obtained, still with stirring.

This process offers the advantage of not requiring the traditional four weeks of ageing as the crystalline structure of the margarine stabilizes after a rest-period of only three to four days.

Preferably, said aqueous dispersion is cooled to 65-75°C, still with stirring.

Preferably, the dispersion of the emulsifier in the vegetable fats is carried out by dispersing, with stirring, at 50-80°C and advantageously 65-75°C, the emulsifier in the vegetable fats.

Conveniently, the dispersion of the emulsifier in the vegetable fats is carried out in a homogenizer-emulsifier by adding an amount of water not greater than 20 % of the total water content of the final composition.

### Brief description of the figures

Figure 1 shows a croissant obtained from Danish pastry dough prepared using the margarine composition according to the invention.
Figure 2 shows a croissant obtained from Danish pastry dough prepared using conventional margarine.

### Detailed description of the invention

The present invention will be further described with reference to the embodiment examples that follow and that are given for illustrative, and not limiting, purposes.

### EXAMPLE 1

| | |
|---|---|
| Water | 30.5 % |
| Inulin | 20.0 % |
| Milk proteins | 0.8 % |
| Pectin | 10.0 % |
| Interesterified palm fats | 38.5 % |
| Mono- and diglycerides | 0.2 % |

In this formulation, a low percentage of fats and emulsifier and a high percentage of aqueous phase ingredients are used. The percentage of fat phase is 38.7 % and the water phase percentage is 61.3 % of which 30.5 % is water.

The margarine composition was prepared as follows.

A homogeneous aqueous dispersion of pectin, inulin and milk proteins, constituting the aqueous phase of the margarine composition according to the invention, was prepared according to the following process.

The pectin is dispersed in boiling water (90% of the total water of the final composition, that is to say 27.45% of the total weight of the composition) using a homogenizer-emulsifier equipped with a turbine emulsifier head ("Mixer 500" of the company Nilma).

Inulin and milk proteins are added to the thus obtained aqueous dispersion, still with stirring by the emulsifier head of the above mentioned homogenizer-emulsifier, until a homogeneous dispersion is obtained (about 6 minutes). The thus obtained homogeneous dispersion is left to cool down, still under the mechanical action of the emulsifier head, to about 70°C.

The fat phase of the composition according to example 1 was prepared by dispersing the mono- and diglycerides in the interesterified palm fats, using the emulsifier head of the homogenizer-emulsifier mentioned above, at a temperature of 70°C. Then, the remaining formulation water was added (that is 3.05% of the total composition weight), still under the action of the emulsifier head and at a temperature of 70°C, until a perfectly homogeneous dispersion was obtained (about 7 minutes).

The thus prepared aqueous and fat phases were pooled, still at a temperature of 70°C, and subjected to the action of the emulsifier head of the homogenizer-emulsifier for about 12 minutes, until a homogeneous emulsion was obtained, which was then transferred to a scraped surface plasticizer for plasticization and was finally sent on to packaging and storage for 3-4 days at 15°C. The margarine was then already ready to be used for the preparation of laminated doughs, without requiring the conventional ageing phase of 3-4 weeks.

### EXAMPLE 2

| | |
|---|---|
| Water | 15.6 % |
| Inulin | 5.0 % |
| Milk proteins | 0.2 % |
| Pectin | 0.1 % |
| Interesterified palm fats | 77.1 % |
| Mono- and diglycerides | 2.0 % |

In this formulation, relatively high percentages of fats and emulsifiers and a low percentage of the aqueous phase ingredients are used. The fat phase percentage is 79.1 % and the aqueous phase percentage is 20.9 % of which 15.6 % is water. The composition was prepared according to the process described in example 1.

### EXAMPLE 3

| | |
|---|---|
| Water | 33.0 % |
| Inulin | 15.0 % |
| Milk proteins | 0.4 % |
| Pectin | 1.0% |
| Interesterified palm fats. | 50.0 % |
| Mono- and diglycerides | 0.6 % |

In this formulation, an intermediate percentage of fats, emulsifiers and aqueous phase ingredients are used. The percentage of the fat phase is 50.6 % and the percentage of the aqueous phase is 49.4 % of which 33.0 % is water. The composition was prepared according to the process described in example 1.

### EXAMPLE 4

Comparative test for the preparation of semifinished Danish pastry dough products for croissants using an 80:20 % dough base to margarine ratio in which the dough base has the formulation described below, and in which the added margarine is, in one case a conventional margarine containing 84% interesterified palm fats, 1% mono- and diglycerides and 15% water, and in the other case a margarine composition prepared according to the recipe of example 3:

| Dough base: | parts per weight |
|---|---|
| Flour | 100.0 |
| Eggs | 36.4 |
| Sugar | 15.0 |
| Water | 13.0 |
| Margarine | 10.0 |
| Glucose syrup | 6.0 |
| Yeast | 3.0 |
| Emulsifiers | 3.5 |
| Salt | 1.5 |
| Vanillin | 0.2 |

The dough base contains the same conventional margarine as above.

The semifinished products obtained by lamination of the Danish pastry doughs prepared using the two different margarines, were oven-baked at 180/190 °C for 9-10 minutes.

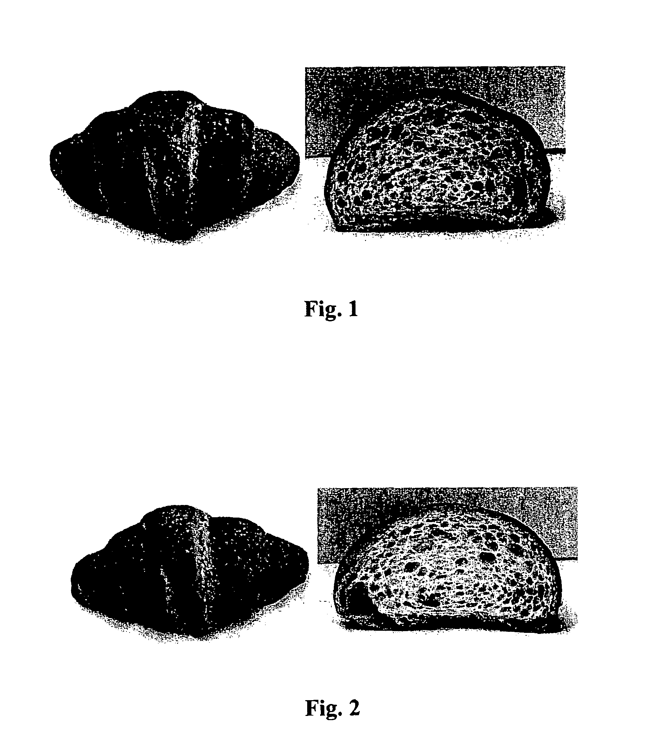

As can be seen from Figures 1 and 2, the croissant obtained from the laminated Danish pastry doughs prepared using the margarine formulation according to the invention (Fig. 1) exhibits characteristics that are comparable, if not superior, to those of the croissant (Fig. 2) obtained from the laminated Danish pastry dough prepared using traditional margarine. Indeed, the surface of the reduced fat Danish croissant is regular in appearance and the air bubble distribution and size across the inside dough appears uniform and homogeneous. Also from the organoleptic point of view no appreciable differences were found. From the nutritional point of view, instead, there was a notable decrease in calorie content (of 14 %) and fat content (of 30 %). Due to the presence of inulin, which constitutes 3.5 % in weight of the final weight of the croissant, the fiber content increased by 205 %.

## Claims

1. Healthy reduced fat content puff pastry margarine composition for laminated doughs comprising, in percentage weight of the total weight, from 35 to 80 % of a fat phase containing vegetable fats, from 20 to 65 % of an aqueous phase comprising inulin, pectin and milk proteins, and at least one emulsifier, wherein said composition consists of natural ingredients only.

2. Composition according to claim 1, in which the fat phase constitutes between 45 and 65 % and the aqueous phase between 35 and 55 % in weight of the total weight of the composition.

3. Composition according to claim 2, in which the fat phase constitutes between 50 and 60 % and the aqueous phase between 40 and 50 % in weight of the total weight of the composition.

4. Composition according to any of the previous claims, in which the vegetable fats consist of interesterified and/or fractionated vegetable oils.

5. Composition according to claim 4, in which said vegetable fats consist of interesterified and/or fractionated palm oil.

6. Composition according to any of the previous claims, in which the inulin content is 5-20 %.

7. Composition according to any of the previous claims, in which the pectin content is 0.1-10 %.

8. Composition according to any of the previous claims , in which the milk protein content is 0.1-2.0 %.

9. Composition according to any of the previous claims, in which said emulsifier consists of mono- and diglycerides of dietary fatty acids.

10. Composition according to claim 9, in which the mono- and diglycerides content is 0.2-2.0 %.

11. Process for the preparation of a healthy reduced fat content puff pastry margarine composition for laminated doughs according to any of the previous claims, comprising the steps of:
a) Preparing a homogeneous acqueous dispersion of pectin, inulin and milk proteins;
b) Preparing a homogeneous dispersion of at least one emulsifier in a fat mixture;
c) Emulsifying at a temperature of 50 - 90°C the two dispersions of steps a) and b), plasticizing the thus obtained margarine composition and leaving it to rest for 3 - 4 days at 8 - 20°C;
wherein, in step a) said aqueous dispersion is prepared by dispersing the pectin in water with stirring at 90-100°C, adding, still with stirring, inulin and milk proteins and cooling down to 50-80°C the aqueous dispersion obtained, still with stirring.

12. Process according to claim 11, in which the aqueous dispersion is cooled down to a temperature of 65-75°C.

13. Process according to claim 11, in which said dispersion of the emulsifier in the fats is prepared by dispersing the emulsifier in the fats at 50-80°C with stirring.

14. Process according to claim 13, in which said emulsifier is dispersed in the fats at a temperature of 65-75°C

15. Process according to any of claims 11 to 14, in which said aqueous dispersion and said dispersion of the emulsifier in the fats are emulsified at a temperature of 65-75°C.

16. Process according to claims 13 or 14, in which the dispersion of the emulsifier in the fats is carried out in a homogenizer-emulsifier having added an amount of water which is less than or equal to 20% of the total water content of the final food composition.

## Patentansprüche

1. Gesunde, fettreduzierte Blätterteig-Margarine-Zusammensetzung für blättrige Teige umfassend, in Gewichtsprozent (Gew.-%) des Gesamtgewichts, von 35 bis 80% einer Fettphase, die pflanzliche Fette enthält, von 20 bis 65% einer wässrigen Phase, die Inulin, Pektin und Milchproteine umfasst, und mindestens einen Emulgator, wobei die Zusammensetzung ausschließlich aus natürlichen Inhaltsstoffen besteht.

2. Zusammensetzung gemäß Anspruch 1, in der die Fettphase zwischen 45 und 65 Gew.-% und die wässrige Phase zwischen 35 und 55 Gew.-% des Gesamtgewichts der Zusammensetzung ausmachen.

3. Zusammensetzung gemäß Anspruch 2, in der die Fettphase zwischen 50 und 60 Gew.-% und die wässrige Phase zwischen 40 und 50 Gew.-% des Gesamtgewichts der Zusammensetzung ausmachen.

4. Zusammensetzung gemäß einem der vorangegangenen Ansprüche, in der die pflanzlichen Fette aus umgeesterten und/oder fraktionierten pflanzlichen Ölen bestehen.

5. Zusammensetzung gemäß Anspruch 4, in der die pflanzlichen Fette aus umgeestertem und/oder fraktioniertem Palmöl bestehen.

6. Zusammensetzung gemäß irgendeinem der vorangegangenen Ansprüche, in der der Inulingehalt 5-20% ist.

7. Zusammensetzung gemäß irgendeinem der vorangegangenen Ansprüche, in der der Pektingehalt 0.1-10% ist.

8. Zusammensetzung gemäß irgendeinem der vorangegangenen Ansprüche, in der der Milchproteingehalt 0,1-2,0% ist.

9. Zusammensetzung gemäß irgendeinem der vorangegangenen Ansprüche, in der der Emulgator aus Mono- und Diglyceriden von Speisefettsäuren besteht.

10. Zusammensetzung gemäß Anspruch 9, in der der Mono- und Diglyceridgehalt 0,2-2,0% ist.

11. Verfahren zur Herstellung einer gesunden, fettreduzierten Blätterteig-Margarine-Zusammensetzung für blättrige Teige gemäß irgendeinem der vorangegangenen Ansprüche, umfassend die Schritte:
a) Herstellen einer homogenen, wässrigen Dispersion aus Pektin, Inulin und Milchproteinen;
b) Herstellen einer homogenen Dispersion mindestens eines Emulgators in einer Fettmischung;
c) Emulgieren der zwei Dispersionen der Schritte a) und b) bei einer Temperatur von 50-90°C, Plastifizieren der so erhaltenen Margarinezusammensetzung und Ruhenlassen der Zusammensetzung für 3 bis 4 Tage bei 8-20°C;
wobei in Schritt a) die wässrige Dispersion durch Dispergieren des Pektins in Wasser unter Rühren bei 90-100°C, Zugeben von Inulin und Milchproteinen, immer noch unter Rühren, und Abkühlen auf 50-80°C der erhaltenen wässrigen Dispersion, immer noch unter Rühren, hergestellt wird.

12. Verfahren gemäß Anspruch 11, bei dem die wässrige Dispersion auf eine Temperatur von 65-75°C abgekühlt wird.

13. Verfahren gemäß Anspruch 11, bei dem die Dispersion des Emulgators in den Fetten durch Dispergieren des Emulgators in den Fetten bei 50-80°C unter Rühren hergestellt wird.

14. Verfahren gemäß Anspruch 13, bei dem der Emulgator bei einer Temperatur von 65-75°C in den Fetten dispergiert wird.

15. Verfahren gemäß irgendeinem der Ansprüche 11 bis 14, bei dem die wässrige Dispersion und die Dispersion des Emulgators in den Fetten bei einer Temperatur von 65-75°C emulgieren.

16. Verfahren gemäß Anspruch 13 oder 14, bei dem die Dispersion des Emulgators in den Fetten in einer Homogenisator-Emulgiermaschine mit einer zugegebenen Wassermenge, die weniger oder gleich 20% des Gesamtwassergehalts der finalen Nahrungsmittelzusammensetzung ist, ausgeführt wird.

## Revendications

1. Composition de margarine saine pour pâte feuilletée à teneur en graisse réduite pour des pâtes stratifiées comprenant, en pourcentage en poids de la masse totale, de 35 % à 80 % d'une phase grasse contenant des graisses végétales, de 20 % à 65 % d'une phase aqueuse comprenant de l'inuline, de la pectine et des protéines de lait, et au moins un émulsifiant, où ladite composition consiste uniquement en ingrédients naturels.

2. Composition selon la revendication 1, dans laquelle la phase grasse constitue entre 45 % et 65 % et la phase aqueuse entre 35 % et 55 % en poids de la masse totale de la composition.

3. Composition selon la revendication 2, dans laquelle la phase grasse constitue entre 50 % et 60 % et la phase aqueuse entre 40 % et 50 % en poids de la masse totale de la composition.

4. Composition selon l'une quelconque des revendications précédentes, dans laquelle les graisses végétales consistent en huiles végétales interesterifiées et/ou fractionnées.

5. Composition selon la revendication 4, dans laquelle lesdites graisses végétales consistent en huile de palme interesterifiée et/ou fractionnée.

6. Composition selon l'une quelconque des revendications précédentes, dans laquelle la teneur en inuline est de 5 % à 20 %.

7. Composition selon l'une quelconque des revendications précédentes, dans laquelle la teneur en pectine est de 0,1 % à 10 %.

8. Composition selon l'une quelconque des revendications précédentes, dans laquelle la teneur en protéines de lait est de 0,1 % à 2,0 %.

9. Composition selon l'une quelconque des revendications précédentes, dans laquelle ledit émulsifiant consiste en mono- et diglycérides d'acides gras diététiques.

10. Composition selon la revendication 9, dans laquelle la teneur en mono- et diglycérides est de 0,2 % à 2,0 %.

11. Procédé pour la préparation d'une composition de margarine saine pour pâte feuilletée à teneur en graisse réduite pour des pâtes stratifiées selon l'une quelconque des revendications précédentes, comprenant les étapes consistant à :
a) préparer une dispersion aqueuse homogène de pectine, d'inuline et de protéines de lait ;
b) préparer une dispersion homogène d'au moins un émulsifiant dans un mélange de graisse ;
c) émulsifier à une température de 50° C à 90° C les deux dispersions des étapes a) et b), plastifier la composition de margarine ainsi obtenue et la laisser reposer pendant 3 à 4 jours à 8 °C à 20° C ;
où, dans l'étape a) ladite dispersion aqueuse est préparée par dispersion de la pectine dans l'eau en agitant à 90° C à 100° C, par addition, toujours en agitant, de l'inuline et des protéines de lait et par refroidissement à 50° C à 80° C de la dispersion aqueuse obtenue, toujours en agitant.

12. Procédé selon la revendication 11, dans lequel la dispersion aqueuse est refroidie à une température de 65° C à 75° C.

13. Procédé selon la revendication 11, dans lequel ladite dispersion de l'émulsifiant dans les graisses est préparée par dispersion de l'émulsifiant dans les graisses à 50° C à 80° C en agitant.

14. Procédé selon la revendication 13, dans lequel ledit émulsifiant est dispersé dans les graisses à une température de 65° C à 75° C.

15. Procédé selon l'une quelconque des revendications 11 à 14, dans lequel ladite dispersion aqueuse et ladite dispersion de l'émulsifiant dans les graisses sont émulsifiées à une température de 65° C à 75° C.

16. Procédé selon la revendication 13 ou 14, dans lequel la dispersion de l'émulsifiant dans les graisses est réalisée dans un émulsifieur-homogénéiseur en ayant ajouté une quantité d'eau qui est inférieure ou égale à 20 % de la teneur totale en eau de la composition alimentaire finale.
